(19) **Europäisches Patentamt / European Patent Office / Office européen des brevets**

(11) **EP 4 447 587 A1**

(12) ## EUROPEAN PATENT APPLICATION
published in accordance with Art. 153(4) EPC

(43) Date of publication:
**16.10.2024 Bulletin 2024/42**

(21) Application number: **23737097.8**

(22) Date of filing: **05.01.2023**

(51) International Patent Classification (IPC):
**H04W 72/04** (2023.01)

(52) Cooperative Patent Classification (CPC):
**H04W 72/04; H04W 72/0446; H04W 72/12; H04W 72/23**

(86) International application number:
**PCT/CN2023/070687**

(87) International publication number:
**WO 2023/131235 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.01.2022 CN 202210009022**

(71) Applicant: **Huawei Technologies Co., Ltd.**
**Shenzhen, Guangdong 518129 (CN)**

(72) Inventors:
• **YU, Jian**
  **Shenzhen, Guangdong 518129 (CN)**
• **SHAO, Jiafeng**
  **Shenzhen, Guangdong 518129 (CN)**
• **LI, Yiran**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **INFORMATION TRANSMISSION METHOD, APPARATUS AND SYSTEM**

(57) Embodiments of this application provide an information transmission method, an apparatus, and a system. The method may include: receiving first indication information, where the first indication information indicates a first time domain resource in a first time period, the first time period includes two or more slots, the first time domain resource is located in at least M slots in the first time period, and M is an integer greater than 1; receiving scheduling information, where the scheduling information indicates a second time domain resource for receiving first data, the second time domain resource is a subset or a universal set of the first time domain resource, the second time domain resource belongs to at least two slots, and the second time domain resource is sparse and inconsecutive time domain resources; and receiving the first data on the second time domain resource. The method can reduce complexity of demodulating data by a terminal device, to improve data transmission efficiency.

FIG. 4

## Description

This application claims priority to Chinese Patent Application No. 202210009022.9, filed with the China National Intellectual Property Administration on January 6, 2022 and entitled "INFORMATION TRANSMISSION METHOD, APPARATUS, AND SYSTEM", which is incorporated herein by reference in its entirety.

## TECHNICAL FIELD

This application relates to the communication field, and in particular, to an information transmission method, an apparatus, and a system.

## BACKGROUND

Currently, in a data transmission process, there are a small quantity of scheduled symbols in each slot during cross-slot resource scheduling. If scheduling is performed based on a single slot, a size of a transport block (transport block size, TBS) scheduled each time is small, and coding gains are low. In addition, a terminal device needs to frequently demodulate a physical downlink control channel (physical downlink control channel, PDCCH), resulting in high complexity. Therefore, how to reduce complexity of demodulating data by the terminal device to improve data transmission efficiency is an urgent problem to be resolved.

## SUMMARY

Embodiments of this application provide an information transmission method, an apparatus, and a system, to reduce demodulation complexity of a terminal device to improve data transmission efficiency.

According to a first aspect, an information transmission method is provided. The method may include: receiving first indication information, where the first indication information indicates a first time domain resource in a first time period, the first time period includes two or more slots, the first time domain resource is located in at least M slots in the first time period, and M is an integer greater than 1; receiving scheduling information, where the scheduling information indicates a second time domain resource for receiving first data, the second time domain resource is a subset or a universal set of the first time domain resource, and the second time domain resource belongs to at least two slots, where the at least two slots include a first slot, the second time domain resource includes a first symbol and a second symbol in the first slot, the first symbol and the second symbol are separated by N symbols, the first symbol and the second symbol are two adjacent symbols on the second time domain resource, and N is an integer greater than or equal to 1;

the at least two slots include a first slot and a second slot, and a symbol that is in the first slot and that is included in the second time domain resource is different from a symbol that is in the second slot and that is included in the second time domain resource; or
a quantity of symbols that are in at least one of the at least two slots and that are included in the second time domain resource is 1; and
receiving the first data on the second time domain resource.

According to the method, data is sent by using sparse and unequally spaced symbols, to obtain a high coding gain. A terminal device can complete demodulation of symbols in a plurality of slots by receiving a PDCCH only once. This helps reduce complexity of the terminal device to improve data transmission efficiency.

With reference to the first aspect, in a possible implementation of the first aspect, the method may further include: receiving second indication information. The second indication information indicates whether a symbol included in the first time domain resource is for receiving data. The data includes the first data.

In this implementation, a symbol-level resource indication is used. This can improve flexibility of scheduling inconsecutive time domain resources, and improves accuracy of scheduled resource determining.

The second indication information may be carried in the first indication information, or may be separately sent. This is not limited in this application.

With reference to the first aspect, in a possible implementation of the first aspect, the first indication information further includes a slot offset. The slot offset indicates a slot index of a 1st slot in the first time period.

With reference to the first aspect, in a possible implementation of the first aspect, the method further includes: receiving time domain position information. The time domain position information indicates an interval between any two adjacent symbols on the first time domain resource.

In this implementation, for a scheduled resource that is regularly distributed, a distribution rule of the resource may be indicated by using time domain position information corresponding to the resource. This reduces overheads and can improve communication efficiency.

The time domain position information may be carried in the first indication information, or may be separately sent. This is not limited in this application.

With reference to the first aspect, in a possible implementation of the first aspect, the method further includes: determining the second time domain resource based on a slot for receiving the second indication information, the first time domain resource, and the scheduling information.

With reference to the first aspect, in a possible implementation of the first aspect, a size of the first data is determined based on the second time domain resource.

With reference to the first aspect, in a possible implementation of the first aspect, the size of the first data is determined based on a first parameter. The first parameter includes at least one of the following:

a quantity of symbols included in the second time domain resource, an overhead of a demodulation reference signal included in the second time domain resource, a higher layer signaling configuration overhead, and a quantity of physical resource blocks included in the second time domain resource.

With reference to the first aspect, in a possible implementation of the first aspect, the first parameter satisfies the following relationship: [0018]

$$N_{RE} = \min\left(156, N'_{RE}\right) \cdot n_{PRB} \quad \text{or} \quad N_{RE} = N'_{RE} \cdot n_{PRB} . \quad N'_{RE} = N^{RB}_{sc} \cdot N^{sh}_{symb} - N^{PRB}_{DMRS} - N^{PRB}_{oh} . \quad N^{RB}_{sc}$$

is a quantity of subcarriers included in a physical resource block in frequency domain. $N^{sh}_{symb}$ is the quantity of symbols included in the second time domain resource. $N^{PRB}_{DMRS}$ is the overhead of the demodulation reference signal included in the second time domain resource. $N^{PRB}_{oh}$ is the higher layer signaling configuration overhead. $n_{PRB}$ is the quantity of physical resource blocks included in the second time domain resource.

The size of the first data may be a TB size (TBS).

According to a transport block size calculation method proposed in this application, a case in which an actual bit rate is far higher than a bit rate corresponding to a modulation and coding scheme can be avoided, to reduce a probability of a decoding error, and improve data transmission reliability.

According to a second aspect, an information transmission method is provided. The method may include: sending first indication information, where the first indication information indicates a first time domain resource in a first time period, the first time period includes two or more slots, the first time domain resource is located in at least M slots in the first time period, and M is an integer greater than 1;

sending scheduling information, where the scheduling information indicates a second time domain resource for sending first data, the second time domain resource is a subset or a universal set of the first time domain resource, and the second time domain resource belongs to at least two slots, where

the at least two slots include a first slot, the second time domain resource includes a first symbol and a second symbol in the first slot, the first symbol and the second symbol are separated by N symbols, the first symbol and the second symbol are two adjacent symbols on the second time domain resource, and N is an integer greater than or equal to 1;

the at least two slots include a first slot and a second slot, and a symbol that is in the first slot and that is included in the second time domain resource is different from a symbol that is in the second slot and that is included in the second time domain resource; or

a quantity of symbols that are in at least one of the at least two slots and that are included in the second time domain resource is 1; and

sending the first data on the second time domain resource.

With reference to the second aspect, in a possible implementation of the second aspect, the method further includes: sending second indication information. The second indication information indicates whether a symbol included in the first time domain resource is for sending data. The data includes the first data.

With reference to the second aspect, in a possible implementation of the second aspect, the first indication information further includes a slot offset. The slot offset indicates a slot index of a 1st slot in the first time period.

With reference to the second aspect, in a possible implementation of the second aspect, the method further includes: sending time domain position information. The time domain position information indicates an interval between any two adjacent symbols on the first time domain resource.

With reference to the second aspect, in a possible implementation of the second aspect, a size of the first data is associated with the second time domain resource.

With reference to the second aspect, in a possible implementation of the second aspect, the size of the first data is associated with a first parameter. The first parameter includes at least one of the following: a quantity of symbols included in the second time domain resource, an overhead of a demodulation reference signal included in the second time domain resource, a higher layer signaling configuration overhead, and a quantity of physical resource blocks included in the second time domain resource.

With reference to the second aspect, in a possible implementation of the second aspect, the first parameter satisfies the following relationship:

$$N_{RE} = \min\left(156, N'_{RE}\right) \cdot n_{PRB} \quad \text{or} \quad N_{RE} = N'_{RE} \cdot n_{PRB}.$$

$N'_{RE} = N^{RB}_{sc} \cdot N^{sh}_{symb} - N^{PRB}_{DMRS} - N^{PRB}_{oh}$. $N^{RB}_{sc}$ is a quantity of subcarriers included in a physical resource block in frequency domain. $N^{sh}_{symb}$ is the quantity of symbols included in the second time domain resource. $N^{PRB}_{DMRS}$ is the overhead of the demodulation reference signal included in the second time domain resource. $N^{PRB}_{oh}$ is the higher layer signaling configuration overhead. $n_{PRB}$ is the quantity of physical resource blocks included in the second time domain resource.

It should be understood that the second aspect is a method corresponding to the first aspect. Explanations, supplements, and beneficial effects of the first aspect are applicable to the second aspect. Details are not described herein.

According to a third aspect, a communication apparatus is provided, including a processing unit and a transceiver unit. The transceiver unit is configured to receive first indication information. The first indication information indicates a first time domain resource in a first time period. The first time period includes two or more slots. The first time domain resource is located in at least M slots in the first time period. M is an integer greater than 1.

The transceiver unit is further configured to receive scheduling information. The scheduling information indicates a second time domain resource for receiving first data. The second time domain resource is a subset or a universal set of the first time domain resource. The second time domain resource belongs to at least two slots.

The at least two slots include a first slot. The second time domain resource includes a first symbol and a second symbol in the first slot. The first symbol and the second symbol are separated by N symbols. The first symbol and the second symbol are two adjacent symbols on the second time domain resource. N is an integer greater than or equal to 1.

Alternatively, the at least two slots include a first slot and a second slot. A symbol that is in the first slot and that is included in the second time domain resource is different from a symbol that is in the second slot and that is included in the second time domain resource.

Alternatively, a quantity of symbols that are in at least one of the at least two slots and that are included in the second time domain resource is 1.

The transceiver unit is further configured to receive the first data on the second time domain resource.

With reference to the third aspect, in a possible implementation of the third aspect, the transceiver unit is further configured to receive second indication information. The second indication information indicates whether a symbol included in the first time domain resource is for receiving data. The data includes the first data.

With reference to the third aspect, in a possible implementation of the third aspect, the first indication information further includes a slot offset. The slot offset indicates a slot index of a 1st slot in the first time period.

With reference to the third aspect, in a possible implementation of the third aspect, the transceiver unit is further configured to receive time domain position information. The time domain position information indicates an interval between any two adjacent symbols on the first time domain resource.

With reference to the third aspect, in a possible implementation of the third aspect, the processing unit is configured to determine the second time domain resource based on a slot for receiving the second indication information, the first time domain resource, and the scheduling information.

With reference to the third aspect, in a possible implementation of the third aspect, a size of the first data is determined based on the second time domain resource.

With reference to the third aspect, in a possible implementation of the third aspect, the size of the first data is determined based on a first parameter. The first parameter includes at least one of the following: a quantity of symbols included in the second time domain resource, an overhead of a demodulation reference signal included in the second time domain resource, a higher layer signaling configuration overhead, and a quantity of physical resource blocks included in the second time domain resource.

With reference to the third aspect, in a possible implementation of the third aspect, the first parameter satisfies the following relationship:

$$N_{RE} = \min\left(156, N_{RE}^{'}\right) \cdot n_{PRB} \quad \text{or} \quad N_{RE} = N_{RE}^{'} \cdot n_{PRB} \,. \quad N_{RE}^{'} = N_{sc}^{RB} \cdot N_{symb}^{sh} - N_{DMRS}^{PRB} - N_{oh}^{PRB} \,. \quad N_{sc}^{RB}$$

is a quantity of subcarriers included in a physical resource block in frequency domain. $N_{symb}^{sh}$ is the quantity of symbols included in the second time domain resource. $N_{DMRS}^{PRB}$ is the overhead of the demodulation reference signal included in the second time domain resource. $N_{oh}^{PRB}$ is the higher layer signaling configuration overhead. $n_{PRB}$ is the quantity of physical resource blocks included in the second time domain resource.

According to a fourth aspect, a communication apparatus is provided, including a processing unit and a transceiver unit. The transceiver unit is configured to send first indication information. The first indication information indicates a first time domain resource in a first time period. The first time period includes two or more slots. The first time domain resource is located in at least M slots in the first time period. M is an integer greater than 1.

The transceiver unit is further configured to send scheduling information. The scheduling information indicates a second time domain resource for sending first data. The second time domain resource is a subset or a universal set of the first time domain resource. The second time domain resource belongs to at least two slots.

The at least two slots include a first slot. The second time domain resource includes a first symbol and a second symbol in the first slot. The first symbol and the second symbol are separated by N symbols. The first symbol and the second symbol are two adjacent symbols on the second time domain resource. N is an integer greater than or equal to 1.

Alternatively, the at least two slots include a first slot and a second slot. A symbol that is in the first slot and that is included in the second time domain resource is different from a symbol that is in the second slot and that is included in the second time domain resource.

Alternatively, a quantity of symbols that are in at least one of the at least two slots and that are included in the second time domain resource is 1.

The transceiver unit is further configured to send the first data on the second time domain resource.

With reference to the fourth aspect, in a possible implementation of the fourth aspect, the transceiver unit is further configured to send second indication information. The second indication information indicates whether a symbol included in the first time domain resource is for sending data. The data includes the first data.

With reference to the fourth aspect, in a possible implementation of the fourth aspect, the first indication information further includes a slot offset. The slot offset indicates a slot index of a 1st slot in the first time period.

With reference to the fourth aspect, in a possible implementation of the fourth aspect, the transceiver unit is further configured to send time domain position information. The time domain position information indicates an interval between any two adjacent symbols on the first time domain resource.

With reference to the fourth aspect, in a possible implementation of the fourth aspect, a size of the first data is associated with the second time domain resource.

With reference to the fourth aspect, in a possible implementation of the fourth aspect, the size of the first data is associated with a first parameter. The first parameter includes at least one of the following:
a quantity of symbols included in the second time domain resource, an overhead of a demodulation reference signal included in the second time domain resource, a higher layer signaling configuration overhead, and a quantity of physical resource blocks included in the second time domain resource.

With reference to the fourth aspect, in a possible implementation of the fourth aspect, the first parameter satisfies the following relationship:

$$N_{RE} = \min\left(156, N_{RE}^{'}\right) \cdot n_{PRB} \quad \text{or} \quad N_{RE} = N_{RE}^{'} \cdot n_{PRB} \,. \quad N_{RE}^{'} = N_{sc}^{RB} \cdot N_{symb}^{sh} - N_{DMRS}^{PRB} - N_{oh}^{PRB} \,. \quad N_{sc}^{RB}$$

is a quantity of subcarriers included in a physical resource block in frequency domain. $N_{symb}^{sh}$ is the quantity of symbols included in the second time domain resource. $N_{DMRS}^{PRB}$ is the overhead of the demodulation reference signal included in the second time domain resource. $N_{oh}^{PRB}$ is the higher layer signaling configuration overhead. $n_{PRB}$ is the quantity of physical resource blocks included in the second time domain resource.

It should be understood that the third aspect and the fourth aspect are apparatus side implementations corresponding to the first aspect and the second aspect. Beneficial effects of the first aspect and the second aspect are also applicable to the third aspect and the fourth aspect. Details are not described herein.

According to a fifth aspect, a computer-readable storage medium is provided. The computer-readable storage medium stores program code executed by a communication apparatus. The program code includes instructions for performing a communication method in the method in the first aspect or the second aspect, any one of the possible implementations of the first aspect or the second aspect, or all the possible implementations of the first aspect or the second aspect.

According to a sixth aspect, a computer program product including instructions is provided. When the computer program product runs on a computer, the computer is enabled to perform the method in the first aspect or the second aspect, any one of the possible implementations of the first aspect or the second aspect, or all the possible implementations of the first aspect or the second aspect.

According to a seventh aspect, a communication system is provided. The communication system includes an apparatus having a function of implementing the method in the first aspect or the second aspect, any one of the possible implementations of the first aspect or the second aspect, or all the possible implementations of the first aspect or the second aspect and various possible implementations.

According to an eighth aspect, a processor is provided, configured to be coupled to a memory, and configured to perform the method in the first aspect or the second aspect, any one of the possible implementations of the first aspect or the second aspect, or all the possible implementations of the first aspect or the second aspect.

According to a ninth aspect, a chip is provided. The chip includes a processor and a communication interface. The communication interface is configured to communicate with an external component or an internal component. The processor is configured to implement the method in the first aspect or the second aspect, any one of the possible implementations of the first aspect or the second aspect, or all the possible implementations of the first aspect or the second aspect.

Optionally, the chip may further include a memory. The memory stores instructions. The processor is configured to execute the instructions stored in the memory or other instructions. When the instructions are executed, the processor is configured to implement the method in the first aspect or the second aspect, or any one of the possible implementations of the first aspect or the second aspect.

Optionally, the chip may be integrated into a terminal device and/or a network device.

## BRIEF DESCRIPTION OF DRAWINGS

FIG. 1 is a diagram of a communication system applicable to an embodiment of this application;
FIG. 2 is a schematic block diagram of a communication apparatus according to an embodiment of this application;
FIG. 3 is a schematic block diagram of another communication apparatus according to an embodiment of this application;
FIG. 4 is a diagram of a time domain resource according to an embodiment of this application;
FIG. 5 is a diagram of another time domain resource according to an embodiment of this application;
FIG. 6 is a diagram of still another time domain resource according to an embodiment of this application;
FIG. 7a and FIG. 7b each are a diagram of yet another time domain resource according to an embodiment of this application;
FIG. 8 is a diagram of still yet another time domain resource according to an embodiment of this application;
FIG. 9 is a diagram of a further time domain resource according to an embodiment of this application; and
FIG. 10 is a diagram of a still further time domain resource according to an embodiment of this application.

## DESCRIPTION OF EMBODIMENTS

The following describes technical solutions in this application with reference to the accompanying drawings.

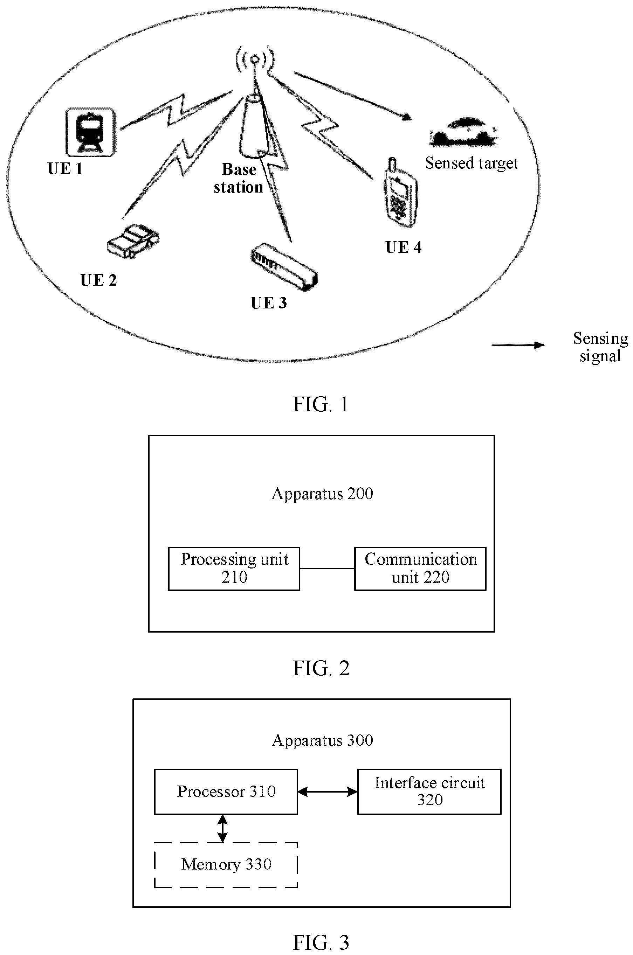

FIG. 1 is a diagram of a communication system applicable to this application. The technical solutions in embodiments of this application may be applied to various communication systems, for example, a 5G (a 5th generation (5th generation, 5G) system) or a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In embodiments of this application, user equipment (user equipment, UE) may be referred to as a terminal device, an access terminal, a subscriber unit, a subscriber station, a mobile station, a remote station, a remote terminal, a mobile device, a user terminal, a terminal, a wireless communication device, a user proxy, or a user apparatus.

The terminal device may be a device that provides a user with voice/data, for example, a handheld device or an in-vehicle device having a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), and the like. This is not limited in embodiments of this application.

By way of example and not limitation, in embodiments of this application, the terminal device may alternatively be a wearable device. The wearable device may also be referred to as a wearable intelligent device, and is a general term of a wearable device that is intelligently designed and developed for daily wear through a wearable technology, for example, glasses, gloves, a watch, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device in embodiments of this application may alternatively be a terminal device in an IoT system. IoT is an important part of future information technology development. A main technical feature of the IoT is connecting a thing to a network through a communication technology, to implement an intelligent network for interconnection between a person and a machine or between one thing and another. The terminal device may alternatively be a communication module, a modem, or a chip that is disposed in the foregoing device or apparatus.

It should be understood that a network device in a wireless communication system may be a device that can communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or is interchangeable with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a radio-frequency head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or is movable. For example, a helicopter or an uncrewed aerial vehicle may be configured as a mobile base station, and one or more cells may move based on a position of the mobile base station. In other examples, the helicopter or the uncrewed aerial vehicle may be configured as a device for communicating with another base station.

In some deployment, in embodiments of this application, the network device may be a CU or a DU, or the network device includes a CU and a DU. The gNB may further include an active antenna unit (AAU).

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are located are not limited in embodiments of this application.

The technical solutions provided in embodiments of this application may be applied to wireless communication between communication devices. The wireless communication between the communication devices may include wireless communication between the network device and the terminal, wireless communication between network devices, and wireless communication between terminal devices. In embodiments of this application, the term "wireless communication" may also be briefly referred to as "communication", and the term "communication" may alternatively be described as "data transmission", "information transmission", or "transmission".

A "sensed target" in embodiments of this application is a target that can be sensed by a radar, and may be the foregoing network device or terminal device, or may be a vehicle, a pedestrian, a brick on a road, or the like. The base station may send downlink data to the terminal device, and the terminal device may send uplink data to the base station. In addition, the base station may send a sensing signal, and receive a reflection echo of the sensed target for estimating a speed, a distance, a moving track, a shape, a size, and the like of the sensed target.

Embodiments of this application provide a communication apparatus. As shown in FIG. 2, an embodiment of this application further provides an apparatus 200. For example, the apparatus may be a software module or a chip system. In this embodiment of this application, the chip system may include a chip, or may include a chip and another discrete component. The apparatus 200 may include a processing unit 210 and a communication unit 220.

In embodiments of this application, the communication unit may also be referred to as a transceiver unit, and may include a sending unit and/or a receiving unit, which are respectively configured to perform information and/or data sending and receiving steps.

The communication unit 220 may also be referred to as a transceiver, a transceiver apparatus, an interface circuit, or the like. The processing unit 210 may also be referred to as a processor, a processing board, a processing module, a processing apparatus, or the like. Optionally, a component that is in the communication unit 220 and that is configured to implement a receiving function may be considered as the receiving unit, and a component that is in the communication unit 220 and that is configured to implement a sending function may be considered as the sending unit. In other words, the communication unit 220 includes the receiving unit and the sending unit. The receiving unit sometimes may also be referred to as a receiver, a receive circuit, or the like. The sending unit sometimes may also be referred to as a transmitter, a transmit circuit, or the like.

FIG. 3 shows an apparatus 300 according to an embodiment of this application. The apparatus shown in FIG. 3 may be an implementation of a hardware circuit of the apparatus shown in FIG. 2. For ease of description, FIG. 3 shows only main components of the communication apparatus.

As shown in FIG. 3, the communication apparatus 300 includes a processor 310 and an interface circuit 320. The processor 310 and the interface circuit 320 are coupled to each other. It may be understood that the interface circuit 320 may be a transceiver or an input/output interface. Optionally, the communication apparatus 300 may further include a memory 330, configured to store instructions executed by the processor 310, or store input data required by the processor 310 to run the instructions, or store data generated after the processor 310 runs the instructions. The processor 310 may be configured to implement a function of the processing unit 210, and the interface circuit 320 is configured to implement a function of the communication unit 220.

To facilitate understanding of the technical solutions in this application, related technical concepts are explained in advance.

1. Time domain resource: a quantity of orthogonal frequency division modulation (orthogonal frequency division modulation, OFDM) symbols occupied in time domain. A minimum granularity of the time domain resource is one OFDM symbol, or may be a mini-slot (mini-slot), a slot (slot), or the like. One mini-slot may include two or more OFDM symbols, and one slot may include 14 OFDM symbols.

2. Frequency domain resource: a frequency resource occupied in frequency domain. A minimum granularity of the frequency domain resource is a resource element (resource element, RE), or may be a physical resource block (physical resource block, PRB), a resource block group (resource block group, RBG), or the like. One PRB includes 12 REs in frequency domain, and the RBG may include 2, 4, 8, or 16 resource blocks (resource blocks, RBs).

3. Transport block: The transport block (transport block, TB) includes a series of bits included in data transmitted at a media access control layer. A physical downlink shared channel (physical downlink shared channel, PDSCH) or a physical uplink shared channel (physical uplink shared channel, PUSCH) performs data transmission by using a TB as a basic unit.

4. Sensing signal: also referred to as a radar signal or a detection signal, an electromagnetic wave signal for detecting a sensed target. The signal may be a pulse signal, or may be a signal in a wireless communication system.

5. Echo signal: After an electromagnetic wave arrives at a sensed target, because the sensed target cannot completely absorb the electromagnetic wave, a signal formed after being reflected by a surface of the sensed target is an echo signal.

6. Sensing resource: a resource for sending a sensing signal, including a sensing time domain resource and a sensing frequency domain resource.

In 4G LTE and 5G NR systems, communication data is mainly transmitted through a PDSCH or a PUSCH. The communication data may include control information, service data (such as a voice service or a video service), and the like. The control information may include RRC layer control information, MAC layer control information, and the like. The RRC layer control information may include system information, dedicated RRC information, and the like. A downlink case is used as an example. Time domain resource allocation information of a PDSCH may be indicated by using downlink control information (downlink control indicator, DCI) in a downlink control channel. When indicating a time domain resource of the PDSCH, a network device needs to indicate a start symbol index of the PDSCH and a quantity of symbols occupied by the PDSCH. For different resource mapping types, both the start symbol index and a symbol length are limited to some extent, as shown in Table 1.

**Table 1 Values of a start symbol index and a symbol length**

| PDSCH mapping type | Normal cyclic prefix (Normal cyclic prefix) | | | Extended cyclic prefix (Extended cyclic prefix) | | |
|---|---|---|---|---|---|---|
| | S | L | S+L | S | L | S+L |
| Type A | {0,1,2,3} (Note 1) | {3,...,14} | {3,...,14} | {0,1,2,3} (Note 1) | {3,...,12} | {3,...,12} |
| Type B | {0,...,12} | {2,...,13} | {2,...,14} | {0,...,10} | {2,4,6} | {2,...,12} |
| Note 1: S=3 is applicable only if dmrs-TypeA-Position=3 | | | | | | |

S is the start symbol index, and L is the quantity of symbols. L represents L consecutive symbols counted from the start symbol index. Because a maximum quantity of OFDM symbols in one slot is 14, a sum of S and L is less than or equal to 14. In the PDSCH mapping type A, for the normal cyclic prefix, a value of S is {0, 1, 2, 3}, a length is {3, 4, ..., 14}, and S+L is less than or equal to 14. In the PDSCH mapping type B, for the normal cyclic prefix, a value of S is {0, 1, ..., 12}, a length is {2, 3, ..., 13}, and S+L is less than or equal to 14.

There may be the following two cases in which the network device indicates the time domain resource:

Case 1: Indicate the time domain resource based on a single-slot TB.

The network device may indicate the time domain resource by using a time domain resource allocation (time domain resource allocation, TDRA) field in the DCI. The DCI uses a row in a TDRA table to indicate the start symbol index and the quantity of symbols for PDSCH transmission. Table 2 shows a predefined time domain resource allocation table.

**Table 2 Time domain resource allocation table**

| Row index | dmrs-TypeA-Position | PDSCH mapping type | $K_0$ | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 2 |

(continued)

| Row index | dmrs-TypeA-Position | PDSCH mapping type | $K_0$ | S | L |
|---|---|---|---|---|---|
| 4 | 2 | Type A | 0 | 2 | 7 |
| | 3 | Type A | 0 | 3 | 6 |
| ... | ... | ... | ... | ... | ... |
| 16 | 2, 3 | Type B | 0 | 2 | 4 |

In the table, a 1st column is an index number, a 2nd column indicates a position of a demodulation reference signal (demodulation reference signal, DMRS), a 3rd column indicates a mapping type of the PDSCH, a 4th column indicates an offset of a sending slot of the PDSCH relative to a slot in which the DCI is located, and last two columns are values of S and L.

In addition to using a default allocation table, the values of S and L may alternatively be configured by using radio resource control (radio resource control, RRC) signaling. For example, the RRC may configure the values of S and L by using PDSCH-TimeDomainResourceAllocation-r16 IE (information element). The RRC first configures PDSCH-TimeDomainResourceAllocationList IE, including a plurality of PDSCH-TimeDomainResourceAllocation-r16 configurations, and a value (start and length indicator value, SLIV) of startSymbolAndLength-r16 is for determining the values of S and L. The values of S and L may be derived based on a given SLIV value. Value ranges of S and L further need to meet a restriction condition in Table 1. A mapping relationship between the SLIV, S, and L is shown in Formula (1):

$$\text{if } (L-1) \leq 7 \text{ then}$$

$$SLIV = 14 \cdot (L-1) + S$$

$$\text{else} \qquad \qquad \text{Formula (1)}$$

$$SLIV = 14 \cdot (14-L+1) + (14-1-S)$$

$$\text{where } 0 < L \leq 14-S$$

After a scheduled time-frequency resource is determined, a TBS may be calculated based on the scheduled time-frequency resource and a modulation and coding scheme. Step 1: Calculate a quantity of REs in each PRB in a scheduled slot:

$$N'_{RE} = N_{sc}^{RB} \cdot N_{symb}^{sh} - N_{DMRS}^{PRB} - N_{oh}^{PRB} \qquad \text{Formula (2)}$$

$N_{sc}^{RB} = 12$ indicates that a quantity of subcarriers included in a PRB in frequency domain is 12. $N_{symb}^{sh}$ indicates a quantity of OFDM symbols allocated to the PDSCH in one slot. $N_{DMRS}^{PRB}$ is a quantity of REs included in a DMRS code division multiplexing (code division multiplexing, CDM) group that does not transmit data. $N_{oh}^{PRB}$ is a higher layer signaling configuration overhead, and a value is 6, 12, or 12. If configuration is not performed, a value of $N_{oh}^{PRB}$ is 0.

Step 2: Calculate a total quantity of REs of the scheduled resource, that is, a quantity of REs for PDSCH transmission:

$$N_{RE} = \min\left(156, N'_{RE}\right) \cdot n_{PRB} \qquad \text{Formula (3)}$$

$n_{PRB}$ is a quantity of PRBs allocated to a terminal.

Step 3: Calculate a quantity of information bits that can be transmitted:

$$N_{\inf o} = N_{RE} \cdot R \cdot Q_m \cdot \upsilon \qquad \text{Formula (5)}$$

A is a bit rate, $Q_m$ is a modulation scheme, and v is a quantity of transmission layers or streams.

Step 4: Calculate the TBS based on the quantity of information bits.

Case 2: Indicate the time domain resource based on a multi-slot TB.

The following uses uplink transmission as an example for description. In TB over multiple slots (TB over multiple slots, TBoMS) transmission, the RRC layer configures, by using PUSCH-TimeDomainAllocationList, a quantity N of slots occupied by the PUSCH. That is, one TB is mapped to N slots. A new column is added to the TDRA table to indicate the quantity N of slots, as shown in Table 3.

**Table 3 TBoMS time domain resource allocation table**

| Row index | dmrs-TypeA-Position | PDSCH mapping type | $K_0$ | S | L | N |
|---|---|---|---|---|---|---|
| 1 | 2 | Type A | 0 | 2 | 12 | 1 |
| | 3 | Type A | 0 | 3 | 11 | 2 |
| 2 | 2 | Type A | 0 | 2 | 10 | 4 |
| | 3 | Type A | 0 | 3 | 9 | 2 |
| 3 | 2 | Type A | 0 | 2 | 9 | 2 |
| | 3 | Type A | 0 | 3 | 2 | 12 |
| ... | ... | ... | ... | ... | ... | ... |

A quantity of REs that can transmit data is calculated as follows:

$$N_{RE} = N \cdot \min\left(156, N_{RE}'\right) \cdot n_{PRB} \qquad \text{Formula (6)}$$

In the TBoMS, it is assumed that a quantity of symbols for PUSCH transmission in each of N transmitted slots is the same.

Currently, in a multi-slot resource scheduling process, quantities of scheduled symbols in different slots may be different. In this case, the foregoing TBoMS time domain resource indication method cannot indicate a quantity of OFDM symbols allocated to each slot. In addition, if the calculation method in Formula (6) is still used, an actual bit rate existed after rate matching may be higher than or lower than a bit rate for TBS calculation. For example, it is assumed that one TB is transmitted in two slots, a quantity of symbols allocated to a 1st slot is 4, a quantity of symbols allocated to a 2nd slot is 2, a calculated quantity of valid REs in the 1st slot is 4000, a quantity of valid REs in the 2nd slot is 2000, and an actual quantity of REs in the two slots is 6000. However, if calculation is performed according to Formula (6), a calculated quantity of REs is 2000 (4000*2). In this case, a calculated TBS is larger. As a result, the actual bit rate is far higher than a bit rate corresponding to the modulation and coding scheme (modulation and code rate scheme, MCS). This deteriorates demodulation performance and increases a probability of a decoding error. In addition, there are a small quantity of scheduled symbols in each slot during cross-slot resource scheduling. If scheduling is performed based on a single slot, a TBS scheduled each time is small, and a coding gain is low. In addition, a terminal device needs to frequently demodulate the PDCCH, resulting in high complexity.

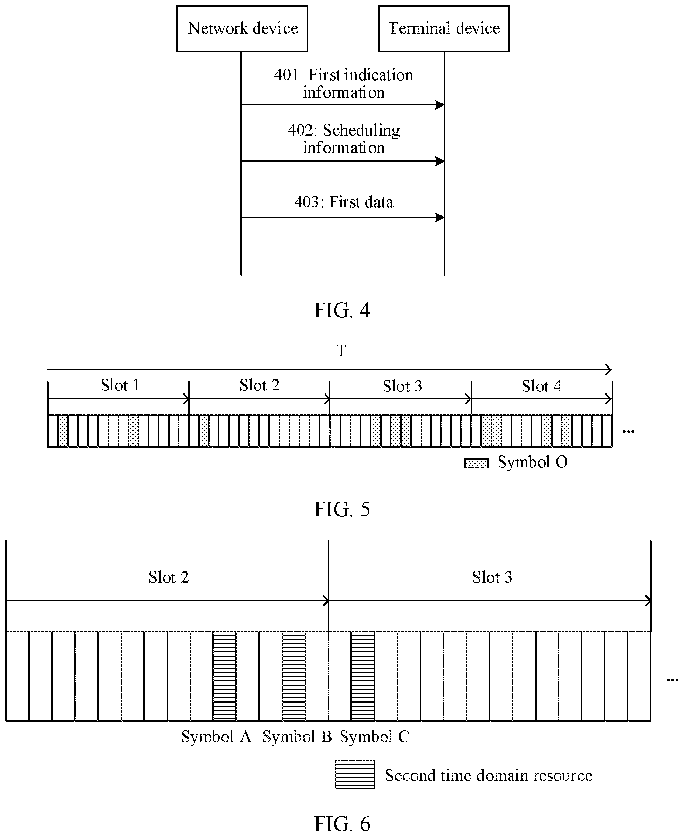

To resolve the foregoing problem, this application provides an information transmission method. In the method, a network device configures sparse and unequally spaced symbols for a terminal device for sending data, so that communication efficiency can be improved. As shown in FIG. 4, the method may include the following steps.

Step 401: A network device sends first indication information to a terminal device, and correspondingly, the terminal device receives the first indication information.

The first indication information indicates a first time domain resource, and the first time domain resource may be a time domain resource that is configured by the network device and that may be used to transmit data. The first time domain resource may be a time domain resource in a first time period. The first time period includes two or more slots. The first time domain resource is located in at least M slots in the first time period. M is an integer greater than 1. As shown in FIG. 5, the first time period is T. The first time period includes a slot 1 and a slot 2. The first time domain resource may be located in two slots in the first time period. For example, the first time domain resource may be symbols O in the slot 1 and the slot 2, or the first time domain resource may be symbols O in the slot 1 and a slot 3. The first time domain resource may be located in four slots in the first time period. The first time domain resource may be symbols O in the slot 1, the slot 2, the slot 3, and a slot 4. It should be understood that the foregoing numbers are merely examples rather than limitations.

The first indication information may be information included in RRC signaling.

Optionally, the first indication information includes duration of the first time period. The duration of the first time period may also be understood as a periodicity in which the network device sends data to the terminal device, that is, a periodicity in which the terminal device receives data, for example, T in FIG. 5. The duration of the first time period that is included in the first indication information may be a quantity of slots included in the first time period. For example, the quantity of slots included in the first time period is M. Alternatively, the duration of the first time period that is included in the first indication information may be a time length. For example, the duration of the first time period is 10 milliseconds. Alternatively, the duration of the first time period may be another physical quantity that may represent duration, for example, a quantity of symbols. This is not limited in this application. M and T are both non-negative integers.

The communication unit 220 in FIG. 2 may be configured to perform the method in step 401. For example, when the apparatus shown in FIG. 2 is the network device, the communication unit 220 is configured to send the first indication information. When the apparatus shown in FIG. 2 is the terminal device, the communication unit 220 is configured to receive the first indication information. The interface circuit 320 in FIG. 3 is configured to implement a function of the communication unit 220. Details are not described herein.

Step 402: The network device sends scheduling information to the terminal device, and correspondingly, the terminal device receives the scheduling information.

The scheduling information indicates a second time domain resource for receiving first data. The second time domain resource is a subset or a universal set of the first time domain resource, and the second time domain resource belongs to at least two slots.

The scheduling information may include a start symbol index S and a quantity L of symbols that are for receiving the first data, and/or the scheduling information includes a quantity P of slots for receiving the first data.

In a possible manner, the at least two slots include a first slot. The second time domain resource includes a first symbol and a second symbol in the first slot. The first symbol and the second symbol are separated by N symbols. The first symbol and the second symbol are two adjacent symbols on the second time domain resource. N is an integer greater than or equal to 1. For example, as shown in FIG. 6, the first time domain resource includes a slot 1 (not shown in FIG. 6), a slot 2, a slot 3, and a slot 4 (not shown in FIG. 6). The second time domain resource is a subset of the first time domain resource. The second time domain resource includes the slot 2 (that is, the first slot) and the slot 3 (that is, a second slot). The second time domain resource includes a symbol A and a symbol B in the slot 2. The symbol A and the symbol B are separated by two symbols. The symbol A and the symbol B are two adjacent symbols of the second time domain resource in the slot 2. It should be understood that the foregoing symbols and slots are merely examples rather than limitations.

S, L, P, and N are all non-negative integers.

In another possible manner, the at least two slots include a first slot and a second slot. A symbol that is in the first slot and that is included in the second time domain resource is different from a symbol that is in the second slot and that is included in the second time domain resource. The foregoing difference includes the following cases.

Case A: A quantity of symbols that are in the first slot and that are included in the second time domain resource is different from a quantity of symbols that are in the second slot and that are included in the second time domain resource. As shown in FIG. 6, the second time domain resource includes two symbols in the first slot (the slot 2), and includes one symbol in the second slot (the slot 3).

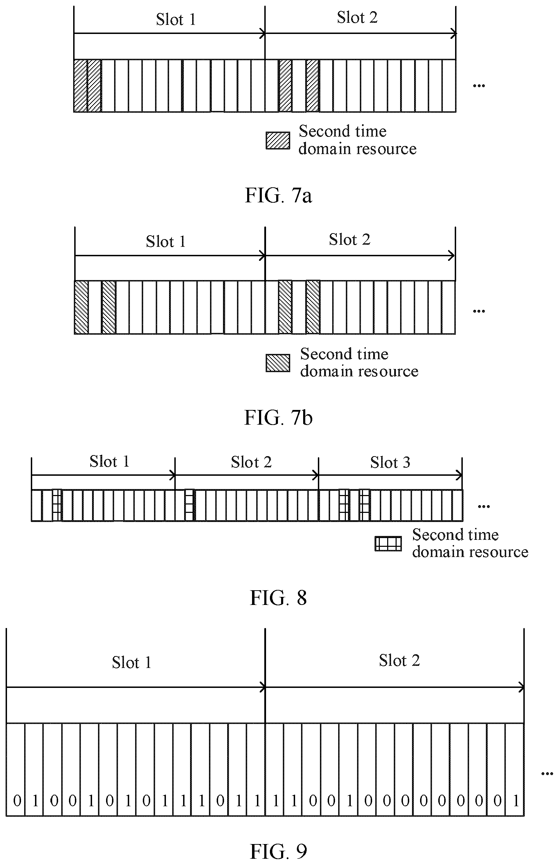

Case B: Indexes of symbols that are in the first slot and that are included in the second time domain resource partially overlap and partially differ from indexes of symbols that are in the second slot and that are included in the second time domain resource. As shown in FIG. 7a, symbols that are in the first slot (a slot 1) and that are included in the second time domain resource are a symbol 0 and a symbol 1, and included symbols in the second slot (a slot 2) are the symbol 1 and a symbol 3.

It should be understood that, in embodiments of this application, an example in which one slot includes 14 symbols and a symbol index ranges from 0 to 13 is used for solution description. However, embodiments of this application are not limited thereto.

Case C: An index of a symbol that is in the first slot and that is included in the second time domain resource is completely different from an index of a symbol that is in the second slot and that is included in the second time domain resource. As shown in FIG. 7b, symbols that are in the first slot (a slot 1) and that are included in the second time domain resource are a symbol 0 and a symbol 2, and included symbols in the second slot (a slot 2) are a symbol 1 and a symbol 3.

It should be understood that the foregoing numbers and symbol indexes are merely examples rather than limitations. The foregoing describes the solution by using an example in which the slot 1 is used as the first slot, and an example in which the slot 2 is used as the second slot. However, this is not limited in embodiments of this application.

For example, the first slot may alternatively be the slot 2, and the second slot may alternatively be the slot 1.

In still another possible manner, a quantity of symbols that are in at least one of the at least two slots and that are included in the second time domain resource is 1 As shown in FIG. 8, a symbol that is in a slot 1 and that is included in the second time domain resource is a symbol 2, an included symbol in a slot 2 is a symbol 1, and included symbols in a slot 3 are the symbol 2 and a symbol 4. It should be understood that, that a quantity of symbols that are in at least one of the at least two slots and that are included in the second time domain resource is 1 may be that a quantity of included symbols in each slot is 1, may be that a quantity of included symbols in some slots is 1, or may be that a quantity of included symbols in only one slot is 1. This is not limited in this application.

Optionally, the network device may send second indication information to the terminal device, and correspondingly, the terminal device receives the second indication information.

The second indication information indicates whether a symbol included in the first time domain resource is for receiving data. The data includes the first data.

For example, the second indication information may indicate a symbol that is in the first time domain resource and that is for transmitting data, or the second indication information may indicate a symbol that is in the first time domain resource and that is not for transmitting data, or the second indication information may indicate both a symbol that is in the first time domain resource and that is for transmitting data and a symbol that is not for transmitting data. This is not limited in this application. For example, a bitmap (bitmap) is an example of the second indication information. An example in which the second indication information indicates both a symbol that is in the first time domain resource and that is for transmitting data and a symbol that is not for transmitting data is used. As shown in FIG. 9, the network device may send {0, 1, 0, 0, 1, 0, 1, 0, 1, 1, 1, 0, 1, 1, 1, 1, 0, 0, 1, 0, 0, 0, 0, 0, 0, 0, 1} to the terminal device. When a bit value is 1, it indicates that the symbol can be for transmitting data. When the bit value is 0, it indicates that the symbol is not for transmitting data.

It should be understood that a correspondence between the bit value and whether the symbol is for transmitting data may be predefined. For example, alternatively, when the bit value is 0, it indicates that the symbol may be for transmitting data. When the bit value is 1, it indicates that the symbol is not for transmitting data.

Optionally, the network device may indicate a slot offset I to the terminal device in the first indication information or time domain position information. The slot offset I is an integer greater than or equal to 0 and less than M. The slot offset is for determining a slot index of a 1st slot in a radio frame (with a frame length of 10 ms) in a periodicity (the first time period). For example, when an interval between subcarriers is 30 kHz, one radio frame includes X=20 slots, and indexes of the slots are {0, 1, 2, ..., 19}. The index of the 1st slot in one periodicity is mod (mod (I, M), X), where mod (a, b) represents a modulo operator. When M=80 and I=2, it indicates that a start slot index of the periodicity is 2.

After receiving the second indication information, the terminal device may determine the second time domain resource based on a slot for receiving the second indication information, the first time domain resource, and the scheduling information. The second indication information may be DCI.

For example, when the scheduling information includes the start symbol index S and the quantity L of symbols that are for receiving the first data, in a possible manner, the start symbol index S is an absolute index in a slot in which a start symbol is located. For example, it is assumed that M=4 and the slot offset I=0, and bitmap values of OFDM symbols included in corresponding M slots are respectively as follows: A bitmap value of the 1st slot is {0, 0, 0, 0, 0, 1, 0, 0, 0, 0, 0, 1, 0}, a bitmap value of a 2nd slot is {0, 0, 0, 0, 0, 0, 0, 0, 0, 0, 0, 1, 0}, a bitmap value of a 3rd slot is {0, 0, 0, 0, 0, 1, 0, 0, 0, 0, 0, 1, 0}, and a bitmap value of a 4th slot is {0, 0, 0, 0, 0, 0, 0, 0, 0, 0, 0, 1, 0}. In addition, it is assumed that the terminal device receives the DCI in the 2nd slot of the M slots, and a slot offset K0 in the TDRA table is 0. It is assumed that S is 12, and it indicates that a start symbol index of a scheduled PDSCH is 12, in other words, the start symbol is a 13th symbol in the slot. L is 4, and it indicates that a quantity of symbols whose bit values are 1 is 4. It may be determined, based on bitmaps of the 2nd, 3rd, and 4th slots, that a quantity of scheduled OFDM symbols is a symbol whose bit value is 1 in the 2nd slot, the 3rd slot, and the 4th slot.

In another possible manner, the start symbol index is a relative index between scheduled symbols. For example, when the scheduling information includes the start symbol index S and the quantity L of symbols that are for receiving the first data, and it is assumed that M=4 and the slot offset I=0, bitmap values of OFDM symbols included in corresponding M slots are respectively: A bitmap value of the 1st slot is {0, 0, 0, 0, 0, 1, 0, 0, 0, 0, 0, 1, 0}, a bitmap value of the 2nd slot is {0, 0, 0, 0, 0, 0, 0, 0, 0, 0, 0, 1, 0}, a bitmap value of the 3rd slot is {0, 0, 0, 0, 0, 1, 0, 0, 0, 0, 0, 1, 0}, and a bitmap value of the 4th slot is {0, 0, 0, 0, 0, 0, 0, 0, 0, 0, 0, 1, 0}. In addition, it is assumed that the terminal device receives the DCI in the 2nd slot of the M slots, and a slot offset K0 in the TDRA table is 0. It is assumed that S is 0, it indicates that a start symbol of a scheduled PDSCH is a 1st symbol whose bit value is 1 in the 1st slot in which the start symbol is located. In other words, although the start symbol is a 13th symbol in the slot, an index of the symbol is 0. For another example, in the 1st slot, a start symbol in scheduled symbols is a 6th symbol and an index is 0, a 2nd symbol in the scheduled symbols is a 13th symbol in the slot, and an index of the symbol is 1. L is 4, and it indicates that a quantity of symbols whose bit values are 1 is 4, that is, a quantity of the scheduled symbols is 4. It may be determined, based on bitmaps of the 2nd, 3rd, and 4th slots, that a quantity of scheduled OFDM symbols is a symbol whose bit value is 1 in

the 2nd slot, the 3rd slot, and the 4th slot.

For example, when the scheduling information includes a quantity P of slots for receiving the first data, and it is assumed that M=4 and the slot offset I=0, bitmap values of OFDM symbols included in corresponding M slots are respectively: A bitmap value of the 1st slot is {0, 0, 0, 0, 0, 1, 0, 0, 0, 0, 0, 1, 0}, a bitmap value of a 2nd slot is {0, 0, 0, 0, 0, 0, 0, 0, 0, 0, 0, 1, 0}, a bitmap value of a 3rd slot is {0, 0, 0, 0, 0, 1, 0, 0, 0, 0, 0, 1, 0}, and a bitmap value of a 4th slot is {0, 0, 0, 0, 0, 0, 0, 0, 0, 0, 0, 1, 0}. In addition, it is assumed that the terminal device receives the DCI in the 2nd slot of the M slots, and a slot offset K0 in the TDRA table is 0. When P=2, the terminal device may determine that currently scheduled slots are the 2nd and the 3rd slots in the M slots, and the scheduled OFDM symbols are symbols whose bitmap values are 1, that is, three symbols in total. When P=3, the terminal may determine that currently scheduled slots are the 2nd, the 3rd, and the 4th slots in the M slots, and a quantity of the scheduled OFDM symbols is 5.

Optionally, the network device may send the time domain position information to the terminal device, and correspondingly, the terminal device receives the time domain position information.

The time domain position information may indicate an interval between any two adjacent symbols on the first time domain resource.

The time domain position information may include the following content.

Quantity of time domain interval configuration sets: The quantity of sets may be greater than or equal to 2, indicating that at least two sets of symbols in different time domain intervals are configured.

Configuration index: indicates an index of current configuration information. For example, when the index is 0, it indicates a first set of configurations, and corresponds to a first set of time domain position information configurations; and when the index is 1, it indicates a second set of configurations, and corresponds to a second set of time domain position information configurations. It should be understood that the foregoing index values are merely examples rather than limitations.

Start slot index: a number of a 1st slot in a periodicity (duration of the first time domain resource).

End slot index: Numbering is performed relative to the 1st slot in the periodicity (the duration of the first time domain resource), or an absolute slot number in the radio frame is used. It may be understood that when symbols in each time domain interval are distributed in the entire periodicity, the item may not need to be configured.

Repeat interval: appears repeatedly every Y slots, where Y is a positive integer greater than 0 and less than M. It should be understood that the repeat interval is a quantity of slots in which symbols in a same time domain interval repeatedly appear, and is different from the duration (periodicity) of the first time domain.

Quantity of interval symbols: A quantity J of interval symbols is defined to indicate that adjacent symbols that can be used for scheduling are separated by J OFDM symbols, where J is an integer greater than or equal to 0 and less than 14. When J=0, it indicates that only one sensing symbol exists in one slot. It should be understood that the interval between adjacent symbols may alternatively be indicated by using another parameter, for example, duration. For example, an interval between adjacent symbols is 1 millisecond. The foregoing numbers are merely examples rather than limitations.

Start symbol index: an index of a 1st symbol that can be used for scheduling in one slot. The 1st scheduled symbol may be determined based on a time sequence. For example, in a slot, a symbol scheduled first in the time sequence is a 1st symbol in the slot.

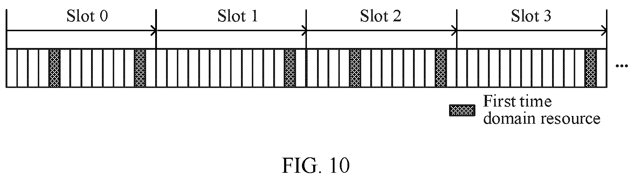

It may be understood that the time domain position information may include a plurality of sets of time domain position information, and each set of time domain position information corresponds to an interval rule. For example, the quantity of time domain interval configuration sets is greater than or equal to 2. A configuration index 0 corresponds to a 1st set of time domain intervals, and a configuration index 1 corresponds to a 2nd set of time domain intervals. Time domain position information of the 1st set of time domain intervals includes a first start slot index, a first end slot index, a first repeat interval, a first quantity of interval symbols, and a first start symbol index. Time domain position information of the 2nd set of time domain intervals includes a second start slot index, a second end slot index, a second repeat interval, a second quantity of interval symbols, and a second start symbol index, and so on. In other words, 2nd to Lth sets of time domain position information configurations are similar to the 1st set of slot interval configurations, and specific values are different. As shown in FIG. 10, there are two regular time domain intervals, and quantities of scheduled symbols in odd-number slots and even-number slots are different. In FIG. 10, in the odd-number slot and the even-number slot, time domain intervals between two adjacent scheduled symbols are respectively seven symbols and zero symbols. The time domain position information is shown in Table 4.

**Table 4 Time domain position information (using M=80 and I=0 as an example)**

|  | First set of time domain position information | Second set of time domain position information |
|---|---|---|
| Configuration index | 0 | 1 |

(continued)

|  | First set of time domain position information | Second set of time domain position information |
|---|---|---|
| Quantity of interval symbols | 7 | 0 |
| Start slot index | 0 | 1 |
| End slot index | 78 | 79 |
| Start symbol index | 4 | 12 |
| Repeat interval | 2 (slots) | 2 (slots) |

M is a quantity of slots included in the first time domain resource, and I is the slot offset.

It may be understood that two sets of time domain position information are used as an example in Table 4. When the first time domain resource includes a plurality of sets of time domain position information, 3rd to Gth sets of time domain position information is shown in Table 4, but specific values are different. G is a positive integer greater than 3.

The terminal device may determine a second time-frequency resource based on the time domain position information and the scheduling information.

Optionally, the network device may send the time domain position information and second indication information to the terminal device. For example, the time domain position information may include a configuration index, an end slot index, and a repeat interval. The time domain position information further includes a start slot index. A numbering manner of the start slot index is similar to the numbering manner of the end slot index. Numbering may be performed relative to a 1st slot in a periodicity (the duration of the first time domain resource) or an absolute slot number in a radio frame is used. The second indication information indicates a bitmap value of each OFDM symbol in a start slot. When a bitmap value is 1, it indicates that an OFDM symbol is for sending data. When a bitmap value is 0, it indicates that an OFDM symbol is not for sending data. A symbol that is in a non-start slot and that is for sending data may be determined based on a bitmap of the start slot and the time domain position information.

It should be understood that the time domain position information may alternatively be a resource distribution pattern (pattern). For example, the pattern may indicate only a position of a symbol that belongs to the first time domain resource, or may indicate only a position of a symbol that does not belong to the first time domain resource, or may indicate positions of both a symbol that belongs to the first time domain resource and a symbol that does not belong to a second time domain resource.

Alternatively, the time domain position information may be a position of a time domain resource. FIG. 10 is used as an example. The time domain position information may be a 5th symbol in a slot 0, a 13th symbol in the slot 0, a 13th symbol in a slot 1, a 5th symbol in a slot 2, a 13th symbol in a slot 5, and a 13th symbol in the slot 1. It should be understood that the foregoing numbers are merely examples rather than limitations.

The second indication information may be separately sent, or may be carried in the first indication information or the time domain position information and sent at the same time. This is not limited in this application.

It may be understood that before sending the first indication information and the scheduling information to the terminal device, the network device may first determine the second time domain resource (that is, the scheduled resource), and determine a size of the first data.

For example, the size of the first data that is determined by the network device is associated with a first parameter. The first parameter includes at least one of the following: a quantity of symbols included in the second time domain resource, an overhead of a demodulation reference signal included in the second time domain resource, a higher layer signaling configuration overhead, and a quantity of physical resource blocks included in the second time domain resource.

Correspondingly, after determining the second time domain resource, the terminal device may determine the size of the first data.

For example, the terminal device may determine the size of the first data based on the first parameter.

The first parameter may satisfy the following relationship:

$$N_{RE} = \min\left(156, N'_{RE}\right) \cdot n_{PRB} \qquad \text{Formula (7),}$$

or

$$N_{RE} = N'_{RE} \cdot n_{PRB} \qquad \text{Formula (8),}$$

where

$$N'_{RE} = N^{RB}_{sc} \cdot N^{sh}_{symb} - N^{PRB}_{DMRS} - N^{PRB}_{oh} \qquad \text{Formula (9)}$$

$N^{RB}_{sc}$ is a quantity of subcarriers included in a physical resource block in frequency domain. $N^{sh}_{symb}$ is the quantity of symbols included in the second time domain resource. $N^{PRB}_{DMRS}$ is the overhead of the demodulation reference signal included in the second time domain resource. $N^{PRB}_{oh}$ is the higher layer signaling configuration overhead. $n_{PRB}$ is the quantity of physical resource blocks included in the second time domain resource.

It should be understood that the size of the first data is a TB size (TBS), not a size of data obtained through channel coding.

Alternatively, the network device may indicate, in the TDRA table, whether the scheduled time domain resource is used, or indicate a TBS calculation manner. For example, as shown in Table 5, in the table, when a value of "TBoMS type" is 1 or is not configured, the TBS may be calculated by using the method of Formula (6). When the value is 2, the TBS is calculated by using the method of formula (9).

**Table 5 TBoMS time domain resource allocation table**

| Row index | dmrs-TypeA-Position | PDSCH mapping type | K0 | S | L | N | TBoMS type |
|---|---|---|---|---|---|---|---|
| 1 | 2 | Type A | 0 | 2 | 12 | 1 | 1 |
| | 3 | Type A | 0 | 3 | 11 | 2 | 2 |
| 2 | 2 | Type A | 0 | 2 | 10 | 4 | 2 |
| | 3 | Type A | 0 | 3 | 9 | 8 | 2 |
| 3 | 2 | Type A | 0 | 2 | 9 | 8 | 2 |
| | 3 | Type A | 0 | 3 | 8 | 12 | 2 |
| ... | ... | ... | ... | ... | ... | ... | ... |

It should be understood that Table 5 is used as an example rather than a limitation. In specific implementation, some content in Table 5 may be used for implementation, or all content in Table 5 may be used for implementation. Table 5 may be used as a part of the implementation. This is not limited in this application.

For example, Table 5 may be preconfigured on the terminal device. For example, the terminal device may determine the TBoMS type based on other information in the table such as S, L, and N. In this indication manner, a size of indication information does not need to be modified.

Alternatively, the network device may indicate the TBoMS type to the terminal device by using indication information. For example, a new field is added to the DCI, and is indicated by using one bit. When the field does not exist or a bit value is 0, it indicates Type 1 TBoMS, and corresponds to the TBS calculation manner of Formula (6). When a bit value is 1, it indicates Type 2 TBoMS, and corresponds to the TBS calculation manner of Formula (9). It should be understood that a correspondence between the bit value and the TBoMS type is merely an example rather than a limitation. The new field is added to indicate the TBoMS Type. This is more flexible.

The communication unit 220 and the processing unit 210 in FIG. 2 may be configured to perform the method in step 402. For example, the communication unit 220 may be configured to send and receive information and/or data. For example, when the apparatus shown in FIG. 2 is the network device, the communication unit 220 is configured to send the second indication information, the scheduling information, or the time domain position information. When the apparatus shown in FIG. 2 is the terminal device, the communication unit 220 is configured to receive the second indication information, the scheduling information, or the time domain position information. When the apparatus shown in FIG. 2 is the network device, the processing unit is configured to determine the first time domain resource and the second time domain resource. When the apparatus shown in FIG. 2 is the terminal device, the processing unit is configured to: determine the first time domain resource and the second time domain resource, and determine the size of the first data. The interface circuit 320 in FIG. 3 may be configured to implement a function of the communication unit 220, and the processor 310 may be configured to implement a function of the communication unit 220. Details are not described herein.

Step 403: The network device sends the first data, and correspondingly, the terminal device receives the first data.

The network device may send the first data on the second time domain resource, and the terminal device may receive the first data on the second time domain resource.

The first data may be carried on a physical downlink shared channel PDSCH.

The communication unit 220 in FIG. 2 may be configured to perform the method in step 403. For example, when the apparatus shown in FIG. 2 is the network device, the communication unit 220 is configured to send the first data. When the apparatus shown in FIG. 2 is the terminal device, the communication unit 220 is configured to receive the first data. The interface circuit 320 in FIG. 3 may be configured to implement a function of the communication unit 220. Details are not described herein.

According to the method, data is sent by using sparse and unequally spaced symbols on the TBoMS, to obtain a high coding gain. The terminal device can complete demodulation of symbols in a plurality of slots by receiving a PDCCH only once. This helps reduce complexity of the terminal device to improve data transmission efficiency. In addition, the TBS calculation method is proposed, and a case in which an actual bit rate is far higher than a bit rate corresponding to an MCS can be avoided, to reduce a probability of a decoding error, and improve data transmission reliability.

It should be understood that the foregoing embodiment is described by using the time domain resource as an example, but is not limited thereto. In embodiments of this application, the network device may indicate the time domain resource and a frequency domain resource. The network device may perform an indication by using a frequency domain resource allocation (frequency domain resource allocation, FDRA) field in the DCI.

It should be understood that embodiments of this application may be applied to a system integrating communication and radar or integrating communication and sensing. The network device may detect a target by receiving an echo signal of a sent sensing signal, and estimate a speed, a distance, a moving track, a shape, a size, and the like of the detected target. Considering that a large quantity of overheads are wasted if the sensing signal is used only for sensing, data may be carried by using the sensing signal. For example, in the foregoing embodiments, the symbol for sending the first data may be the sensing symbol. In other words, the symbol for sending the first data may also be used for sensing and detection. This can reduce system overheads caused by sending of the sensing signal. The duration of the first time period in the foregoing embodiments may also be understood as a periodicity in which the network device sends the sensing signal. The time domain position information in the foregoing embodiments may be time domain position information of the sensing symbol.

It should be noted that the foregoing application scenario is merely an example rather than a limitation. In embodiments of this application, downlink data transmission is used as an example for description. It may be understood that uplink data transmission is also applicable to solutions of this application.

Embodiments described in this specification may be independent solutions, or may be combined based on internal logic. All these solutions fall within the protection scope of this application. It should be understood that the steps in the foregoing embodiments are merely intended to clearly describe the technical solutions of embodiments, and a sequence of performing the steps is not limited.

In the foregoing embodiments provided in this application, the methods provided in embodiments of this application are separately described from a perspective of interaction between devices. To implement the functions in the methods provided in embodiments of this application, the network device or the terminal device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

In embodiments of this application, module division is an example, and is merely a logical function division. In actual implementation, another division manner may be used. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

When the communication apparatus is a chip used in a terminal device, the chip in the terminal device implements the function of the terminal device in the foregoing method embodiment. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiment. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component or any combination thereof. The general-purpose processor may be a microprocessor, or any conventional processor.

In embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in the network device or the terminal device. Certainly, the processor and the storage medium may alternatively exist as discrete components in the network device or the terminal device.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the communication apparatus, the system, and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application In this way, this application is intended to cover these modifications and variations provided that these modifications and variations of this application fall within the scope of the claims of this application and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information transmission method, comprising:

    receiving first indication information, wherein the first indication information indicates a first time domain resource in a first time period, the first time period comprises two or more slots, the first time domain resource is located in at least M slots in the first time period, and M is an integer greater than 1;

receiving scheduling information, wherein the scheduling information indicates a second time domain resource for receiving first data, the second time domain resource is a subset or a universal set of the first time domain resource, and the second time domain resource belongs to at least two slots, wherein

the at least two slots comprise a first slot, the second time domain resource comprises a first symbol and a second symbol in the first slot, the first symbol and the second symbol are separated by N symbols, the first symbol and the second symbol are two adjacent symbols on the second time domain resource, and N is an integer greater than or equal to 1;

the at least two slots comprise a first slot and a second slot, and a symbol that is in the first slot and that is comprised in the second time domain resource is different from a symbol that is in the second slot and that is comprised in the second time domain resource; or

a quantity of symbols that are in at least one of the at least two slots and that are comprised in the second time domain resource is 1; and

receiving the first data on the second time domain resource.

2. The method according to claim 1, wherein the method further comprises:
receiving second indication information, wherein the second indication information indicates whether a symbol comprised in the first time domain resource is for receiving data, and the data comprises the first data.

3. The method according to claim 1 or 2, wherein the first indication information further comprises a slot offset, and the slot offset indicates a slot index of a 1$^{st}$ slot in the first time period.

4. The method according to any one of claims 1 to 3, wherein the method further comprises:
receiving time domain position information, wherein the time domain position information indicates an interval between any two adjacent symbols on the first time domain resource.

5. The method according to any one of claims 1 to 4, wherein the method further comprises:
determining the second time domain resource based on a slot for receiving the second indication information, the first time domain resource, and the scheduling information.

6. The method according to any one of claims 1 to 5, wherein a size of the first data is determined based on the second time domain resource.

7. The method according to claim 6, wherein that a size of the first data is determined based on the second time domain resource comprises that the size of the first data is determined based on a first parameter, and the first parameter comprises at least one of the following:

a quantity $N_{symb}^{sh}$ of symbols comprised in the second time domain resource, an overhead $N_{DMRS}^{PRB}$ of a demodulation reference signal comprised in the second time domain resource, a higher layer signaling configuration overhead $N_{oh}^{PRB}$, and a quantity $n_{PRB}$ of physical resource blocks comprised in the second time domain resource.

8. The method according to claim 7, wherein the first parameter satisfies the following relationship:

$$N_{RE} = \min\left(156, N_{RE}'\right) \cdot n_{PRB} \quad \text{or} \quad N_{RE} = N_{RE}' \cdot n_{PRB},$$

wherein

$$N_{RE}' = N_{sc}^{RB} \cdot N_{symb}^{sh} - N_{DMRS}^{PRB} - N_{oh}^{PRB}$$
, and $N_{sc}^{RB}$ is a quantity of subcarriers comprised in a physical resource block in frequency domain.

9. An information transmission method, comprising:

sending first indication information, wherein the first indication information indicates a first time domain resource in a first time period, the first time period comprises two or more slots, the first time domain resource is located in at least M slots in the first time period, and M is an integer greater than 1;

sending scheduling information, wherein the scheduling information indicates a second time domain resource for sending first data, the second time domain resource is a subset or a universal set of the first time domain resource, and the second time domain resource belongs to at least two slots, wherein

the at least two slots comprise a first slot, the second time domain resource comprises a first symbol and a second symbol in the first slot, the first symbol and the second symbol are separated by N symbols, the first symbol and the second symbol are two adjacent symbols on the second time domain resource, and N is an integer greater than or equal to 1;

the at least two slots comprise a first slot and a second slot, and a symbol that is in the first slot and that is comprised in the second time domain resource is different from a symbol that is in the second slot and that is comprised in the second time domain resource; or

a quantity of symbols that are in at least one of the at least two slots and that are comprised in the second time domain resource is 1; and

sending the first data on the second time domain resource.

10. The method according to claim 9, wherein the method further comprises:
sending second indication information, wherein the second indication information indicates whether a symbol comprised in the first time domain resource is for sending data, and the data comprises the first data.

11. The method according to claim 9 or 10, wherein the first indication information further comprises a slot offset, and the slot offset indicates a slot index of a $1^{st}$ slot in the first time period.

12. The method according to any one of claims 9 to 11, wherein the method further comprises:
sending time domain position information, wherein the time domain position information indicates an interval between any two adjacent symbols on the first time domain resource.

13. The method according to any one of claims 9 to 12, wherein a size of the first data is associated with the second time domain resource.

14. The method according to claim 13, wherein that a size of the first data is associated with the second time domain resource comprises that the size of the first data is associated with a first parameter, and the first parameter comprises at least one of the following:

a quantity $N_{symb}^{sh}$ of symbols comprised in the second time domain resource, an overhead $N_{DMRS}^{PRB}$ of a demodulation reference signal comprised in the second time domain resource, a higher layer signaling configuration overhead $N_{oh}^{PRB}$, and a quantity $n_{PRB}$ of physical resource blocks comprised in the second time domain resource.

15. The method according to claim 14, wherein the first parameter satisfies the following relationship:

$$N_{RE} = \min\left(156, N_{RE}^{'}\right) \cdot n_{PRB} \quad \text{or} \quad N_{RE} = N_{RE}^{'} \cdot n_{PRB},$$

wherein $N_{RE}^{'} = N_{sc}^{RB} \cdot N_{symb}^{sh} - N_{DMRS}^{PRB} - N_{oh}^{PRB}$, and $N_{sc}^{RB}$ is a quantity of subcarriers comprised in a physical resource block in frequency domain.

16. A communication apparatus, comprising a processing unit and a transceiver unit, wherein the transceiver unit is configured to receive first indication information, the first indication information indicates a first time domain resource in a first time period, the first time period comprises two or more slots, the first time domain resource is located in at least M slots in the first time period, and M is an integer greater than 1;

the transceiver unit is further configured to receive scheduling information, wherein the scheduling information indicates a second time domain resource for receiving first data, the second time domain resource is a subset or a universal set of the first time domain resource, and the second time domain resource belongs to at least two slots, wherein

the at least two slots comprise a first slot, the second time domain resource comprises a first symbol and a second symbol in the first slot, the first symbol and the second symbol are separated by N symbols, the first symbol and the second symbol are two adjacent symbols on the second time domain resource, and N is an integer greater than or equal to 1;

the at least two slots comprise a first slot and a second slot, and a symbol that is in the first slot and that is comprised in the second time domain resource is different from a symbol that is in the second slot and that is comprised in the second time domain resource; or

a quantity of symbols that are in at least one of the at least two slots and that are comprised in the second time domain resource is 1; and

the transceiver unit is further configured to receive the first data on the second time domain resource.

17. The communication apparatus according to claim 16, wherein the transceiver unit is further configured to receive second indication information, wherein the second indication information indicates whether a symbol comprised in the first time domain resource is for receiving data, and the data comprises the first data.

18. The communication apparatus according to claim 16 or 17, wherein the first indication information further comprises a slot offset, and the slot offset indicates a slot index of a 1$^{st}$ slot in the first time period.

19. The communication apparatus according to any one of claims 16 to 18, wherein the transceiver unit is further configured to receive time domain position information, wherein the time domain position information indicates an interval between any two adjacent symbols on the first time domain resource.

20. The communication apparatus according to any one of claims 16 to 19, wherein the processing unit is configured to determine the second time domain resource based on a slot for receiving the second indication information, the first time domain resource, and the scheduling information.

21. The communication apparatus according to any one of claims 16 to 20, wherein a size of the first data is determined based on the second time domain resource.

22. The communication apparatus according to claim 21, wherein the size of the first data is determined based on a first parameter, and the first parameter comprises at least one of the following:

a quantity $N_{symb}^{sh}$ of symbols comprised in the second time domain resource, an overhead $N_{DMRS}^{PRB}$ of a demodulation reference signal comprised in the second time domain resource, a higher layer signaling configuration overhead $N_{oh}^{PRB}$, and a quantity $\boldsymbol{n_{PRB}}$ of physical resource blocks comprised in the second time domain resource.

23. The communication apparatus according to claim 22, wherein the first parameter satisfies the following relationship:

$$N_{RE} = \min\left(156, N_{RE}^{'}\right) \cdot n_{PRB} \quad \text{or} \quad N_{RE} = N_{RE}^{'} \cdot n_{PRB},$$

wherein $N_{RE}^{'} = N_{sc}^{RB} \cdot N_{symb}^{sh} - N_{DMRS}^{PRB} - N_{oh}^{PRB}$, and $N_{sc}^{RB}$ is a quantity of subcarriers comprised in a physical resource block in frequency domain.

24. A communication apparatus, comprising a processing unit and a transceiver unit, wherein the transceiver unit is configured to send first indication information, the first indication information indicates a first time domain resource in a first time period, the first time period comprises two or more slots, the first time domain resource is located in at least M slots in the first time period, and M is an integer greater than 1;

the transceiver unit is further configured to send scheduling information, wherein the scheduling information indicates a second time domain resource for sending first data, the second time domain resource is a subset or a universal set of the first time domain resource, and the second time domain resource belongs to at least two slots, wherein

the at least two slots comprise a first slot, the second time domain resource comprises a first symbol and a second symbol in the first slot, the first symbol and the second symbol are separated by N symbols, the first symbol and the second symbol are two adjacent symbols on the second time domain resource, and N is an integer greater than or equal to 1;

the at least two slots comprise a first slot and a second slot, and a symbol that is in the first slot and that is comprised in the second time domain resource is different from a symbol that is in the second slot and that is comprised in the second time domain resource; or

a quantity of symbols that are in at least one of the at least two slots and that are comprised in the second time domain resource is 1; and

the transceiver unit is further configured to send the first data on the second time domain resource.

25. The communication apparatus according to claim 24, wherein the transceiver unit is further configured to send second indication information, wherein the second indication information indicates whether a symbol comprised in the first time domain resource is for sending data, and the data comprises the first data.

26. The communication apparatus according to claim 24 or 25, wherein the first indication information further comprises a slot offset, and the slot offset indicates a slot index of a 1st slot in the first time period.

27. The communication apparatus according to any one of claims 24 to 26, wherein the transceiver unit is further configured to send time domain position information, wherein the time domain position information indicates an interval between any two adjacent symbols on the first time domain resource.

28. The communication apparatus according to any one of claims 24 to 27, wherein a size of the first data is associated with the second time domain resource.

29. The communication apparatus according to claim 28, wherein that a size of the first data is associated with the second time domain resource comprises that the size of the first data is associated with a first parameter, and the first parameter comprises at least one of the following:

a quantity $N_{symb}^{sh}$ of symbols comprised in the second time domain resource, an overhead $N_{DMRS}^{PRB}$ of a demodulation reference signal comprised in the second time domain resource, a higher layer signaling configuration overhead $N_{oh}^{PRB}$, and a quantity $n_{PRB}$ of physical resource blocks comprised in the second time domain resource.

30. The communication apparatus according to claim 29, wherein the first parameter satisfies the following relationship:

$$N_{RE} = \min\left(156, N_{RE}^{'}\right) \cdot n_{PRB} \quad \text{or} \quad N_{RE} = N_{RE}^{'} \cdot n_{PRB},$$

wherein

$$N_{RE}^{'} = N_{sc}^{RB} \cdot N_{symb}^{sh} - N_{DMRS}^{PRB} - N_{oh}^{PRB}$$, and $N_{sc}^{RB}$ is a quantity of subcarriers comprised in a physical resource block in frequency domain.

31. A communication device, comprising a processor, wherein the processor is configured to execute a computer program or instructions, to enable the communication device to perform the method according to any one of claims 1 to 30.

32. A communication system, wherein the communication system comprises the communication apparatus according to any one of claims 16 to 23, and/or the communication apparatus according to any one of claims 24 to 30.

33. A computer-readable storage medium, comprising a computer program or instructions, wherein when the computer program or the instructions is/are run on a computer, the computer is enabled to perform the method according to any one of claims 1 to 30.

34. A computer program product, comprising instructions, wherein when the instructions are run on a computer, the computer is enabled to perform the method according to any one of claims 1 to 30.

FIG. 1

FIG. 2

FIG. 3

FIG. 4

FIG. 5

FIG. 6

Second time
domain resource

FIG. 7a

Second time
domain resource

FIG. 7b

Second time
domain resource

FIG. 8

FIG. 9

First time
domain resource

FIG. 10

## INTERNATIONAL SEARCH REPORT

International application No.

**PCT/CN2023/070687**

### A. CLASSIFICATION OF SUBJECT MATTER

H04W 72/04(2023.01)i

According to International Patent Classification (IPC) or to both national classification and IPC

### B. FIELDS SEARCHED

Minimum documentation searched (classification system followed by classification symbols)

IPC: H04W H04Q

Documentation searched other than minimum documentation to the extent that such documents are included in the fields searched

Electronic data base consulted during the international search (name of data base and, where practicable, search terms used)

CNKI, CNTXT, ENTXT, ENTXTC, WPABS, 3GPP: 跨时隙, 跨多个时隙, 符号, 传输块, 两个, 多个, 间隔, 不同, 数量, cross, slot, multi+, TB over multi+ slot, TBoMS, symbol, transport block, TB, two, interval, gap, different, number

### C. DOCUMENTS CONSIDERED TO BE RELEVANT

| Category* | Citation of document, with indication, where appropriate, of the relevant passages | Relevant to claim No. |
|---|---|---|
| X | CN 110035529 A (HUAWEI TECHNOLOGIES CO., LTD.) 19 July 2019 (2019-07-19) description, paragraphs 0066-0217 and 0242-0253, and figures 3-13 | 1-34 |
| X | CN 113439400 A (ZTE CORP.) 24 September 2021 (2021-09-24) description, paragraphs 0016-0103, and figures 2-5D | 1-34 |
| A | CN 113273286 A (BEIJING XIAOMI MOBILE SOFTWARE CO., LTD.) 17 August 2021 (2021-08-17) entire document | 1-34 |
| A | US 2019349942 A1 (SAMSUNG ELECTRONICS CO., LTD.) 14 November 2019 (2019-11-14) entire document | 1-34 |
| X | INTERDIGITAL, INC. "TB processing over multi-slot PUSCH." *3GPP TSG RAN WG1 #104b-e, R1-2103008*, 20 April 2021 (2021-04-20), sections 1-2 and 5 | 1-34 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 March 2023** | **22 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/070687**

| Patent document cited in search report | | | Publication date (day/month/year) | Patent family member(s) | | | Publication date (day/month/year) |
|---|---|---|---|---|---|---|---|
| CN | 110035529 | A | 19 July 2019 | US | 2020344804 | A1 | 29 October 2020 |
| | | | | WO | 2019137455 | A1 | 18 July 2019 |
| | | | | EP | 3734847 | A1 | 04 November 2020 |
| | | | | CA | 3088226 | A1 | 18 July 2019 |
| CN | 113439400 | A | 24 September 2021 | WO | 2020164102 | A1 | 20 August 2020 |
| | | | | EP | 3925120 | A1 | 22 December 2021 |
| CN | 113273286 | A | 17 August 2021 | WO | 2022213294 | A1 | 13 October 2022 |
| US | 2019349942 | A1 | 14 November 2019 | EP | 3563509 | A1 | 06 November 2019 |
| | | | | WO | 2018128356 | A1 | 12 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210009022